Europäisches Patentamt

(19) European Patent Office

Office européen des brevets

(11) Publication number: **0 004 476**
**B1**

(12) **EUROPEAN PATENT SPECIFICATION**

(45) Date of publication of patent specification: **30.10.85**

(21) Application number: **79300489.6**

(22) Date of filing: **27.03.79**

(51) Int. Cl.⁴: **G 11 B 7/08, H 04 N 5/76**

(54) Time base error correction for optical disc players.

(30) Priority: **27.03.78 US 890670**

(43) Date of publication of application:
**03.10.79 Bulletin 79/20**

(45) Publication of the grant of the patent:
**30.10.85 Bulletin 85/44**

(84) Designated Contracting States:
**BE CH DE FR GB IT NL SE**

(56) References cited:
**CH-A- 591 138**
**DE-A-2 652 790**
**DE-B-2 353 127**
**DE-B-2 541 520**
**DE-B-2 606 006**
**US-A-4 037 252**
**US-A-4 074 314**

**Information Display, Vol. 12, No. 2, April 1976,
Pages 12-19**

(73) Proprietor: **DISCOVISION ASSOCIATES**
**P.O. Box 6600 3300 Hyland Avenue
Costa Mesa California 92626 (US)**

(72) Inventor: **Ceshkovsky, Ludwig
10435, Morning Glory Avenue
Fountain Valley California (US)**
Inventor: **Dakin, Wayne Ray
816, Camino Real
20, Redondo Beach California (US)**

(74) Representative: **Arthur, George Fitzgerald et al
KILBURN & STRODE 30, John Street
London WC1N 2DD (GB)**

Courier Press, Leamington Spa, England.

## Description

This invention relates to tracking systems and methods for use in a player apparatus for recovering information recorded on a video disc or other information bearing surface, and one object is to provide means for time base error correction in an optical system for impinging a source beam of radiation upon tangentially arranged information tracks on a surface of a disc at a selected location to produce a reflected modulated beam of radiation containing the information, and signal recovery means for recovering the information from the modulated beam and for producing an electrical signal representative of the information.

This application is one of a series of related cases having some disclosure in common; all are concerned with aspects of reading optical discs. The cases are EP—A—4 476 (the present parent case) and divisional applications EP—A—35 287, EP—A—35 288, EP—A—35 803, EP—A—36 222.

EP—A—35 287 is concerned with the correction for the non-uniform gain of the optical system used during reading; a reference signal of predetermined amplitude and lying in a first portion of the recorded frequency spectrum is detected on read-out and compared with a further reference amplitude to give an error signal, the latter being used to control a frequency selective variable gain amplifier and thus compensate for incorrect gain in other portions of the recorded frequency spectrum. EP—A—35 288 is concerned with track changing, a track following loop being disconnected before a jump signal is applied to the beam steering means and a compensation signal being applied to that means to decelerate the beam as it approaches the desired track; the track following loop is reconnected before that track is reached, so as to co-operate with the compensation signal. EP—A—35 803 concerns a disc rotation spindle servo system having a spindle tachometer and a reference frequency source; the tachometer has two independent tachometer elements indicating the spindle rotation, two error signals being produced by comparing the signals from these elements with the reference frequency and the spindle motor being controlled in response to the sum of those error signals. EP—A—36 222 is concerned with focus acquisition in a focus system using both focus and information detectors; it imposes a relatively high frequency oscillation on the movement of the focusing lens when focus is being sought.

The present case EP—A—4 476 is concerned with correcting time base errors by comparing the phase of a signal from the disc with a reference signal and moving the impingement location on the readout beam on the disc in a direction along the track to counteract the errors; the result of the comparison is altered in response to the radial location of the beam.

German Patent Specification No. 2353127 (MCA Discovision) discloses how eccentricity of a video disc can introduce a regular cyclic timing error in the information recovered from the disc, and explains how such a timing error can be corrected by circumferential movement of the reading spot by deflecting a mirror in the optical system. There is a photocell which can indicate if the spot is not correctly centered on the track being read, as would be the case if the track was eccentric. From the photocell output signal a control signal is derived for moving the mirror to correct for the timing error arising from the eccentricity.

An article by K.D. Broadbent, of a company associated with the Applicant Company appearing on page 12 of the April 1976 Edition of "Information Display" and entitled "A Review of the MCA Discovision System", describes some features of the MCA discs, and methods of making them. In particular the article teaches that it is possible to correct for non-concentricity, a disc-out-of-roundness, and vibration by applying to a tangential mirror a control signal derived from a phase comparison of the extracted chrominance signal from the video output and a local subcarrier oscillator. The article however teaches nothing about the idea of making the control signal dependent upon the radial position of the reading beam which is an important feature of the present invention.

The present invention is particularly applicable to a video disc player operating to recover frequency modulated video signals from an information bearing surface of a video disc. The frequency modulated video information is stored in a plurality of concentric circles or a single spiral extending over an information bearing portion of the video disc surface. The frequency modulated video signal is represented by indicia arranged in track-like fashion on the information bearing surface portion of the video disc and comprising successively positioned reflective and non-reflective regions in the information track.

The present application was published as EP—A—4 476 on 3rd October, 1979 and then contained a full disclosure of all the inventions summarised above.

The invention may be carried into practice in various ways, and one embodiment will be described by way of example with reference to the accompanying drawings in which:—

FIGURE 1 is a generalised block diagram of a video disc player;

FIGURE 2 is a schematic diagram of the optical system employed in the video disc player shown in FIGURE 1; and

FIGURE 3 is a block diagram of the tangential servo employed in the video disc player of FIGURE 1 and shown at 80. It was originally published in EP—A—4 476 on 3rd October, 1979 as Figure 11, and is referred to as Figure 11 in Figure 1 but has now been renumbered.

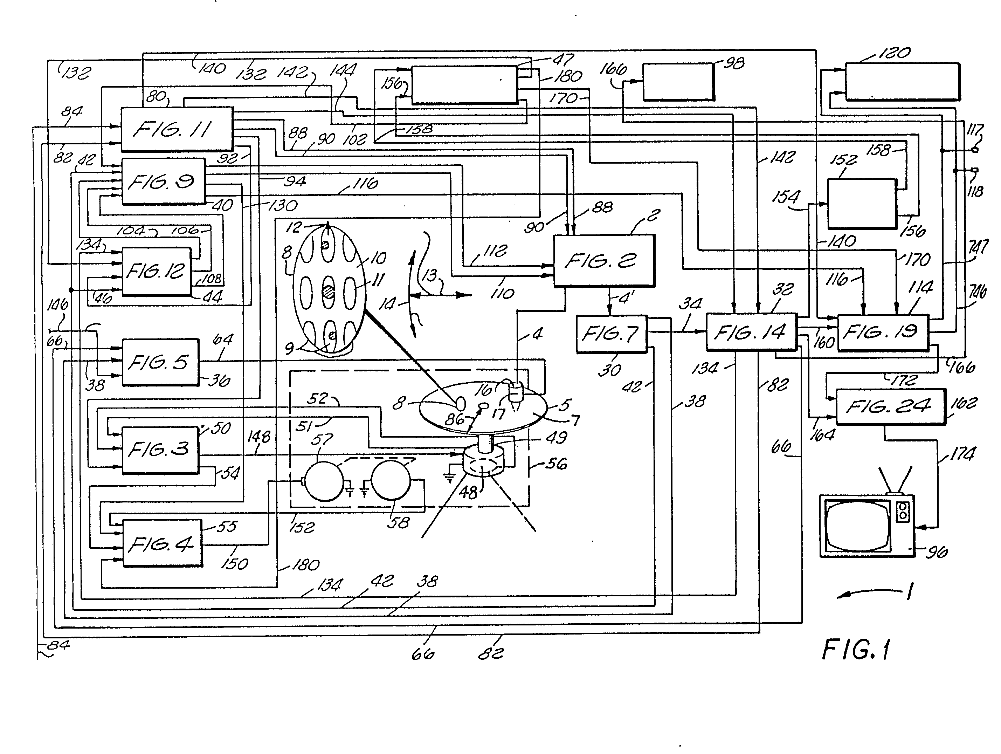

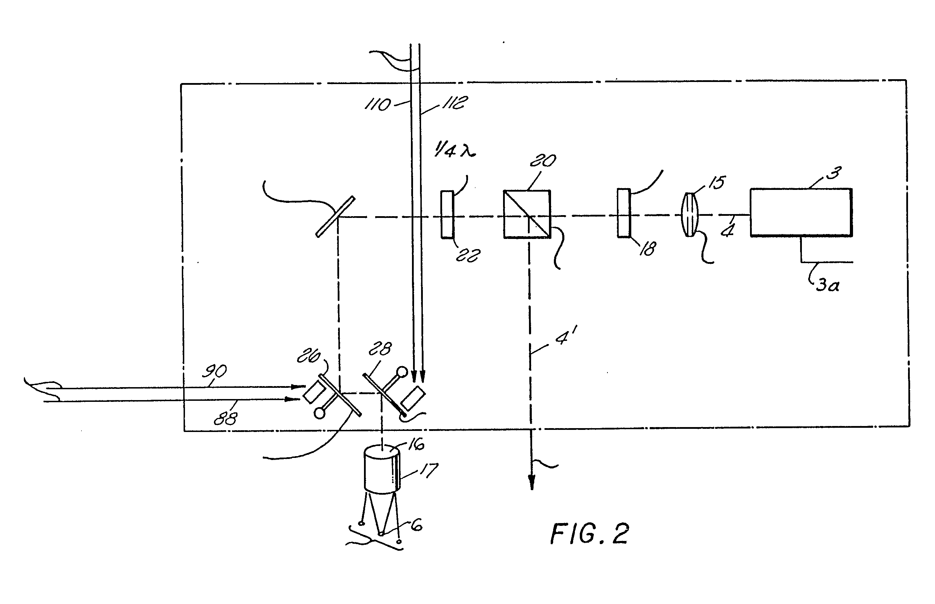

Referring to FIGURE 1, there is shown a schematic block diagram of a video disc player system indicated generally at 1. The player 1 employs an optical system indicated at 2 and shown in greater detail in FIGURE 2.

Referring collectively to FIGURES 1 and 2, the optical system 2 includes a read laser 3 employed for generating a read beam 4 which is used for reading a frequency modulated encoded signal stored on a video disc 5. The read beam 4 is polarised in a predetermined direction. The read beam 4 is directed to the video disc 5 by the optical system 2. An additional function of the optical system 2 is to focus the light beam down to a spot 6 at its point of impingement with the video disc 5.

A portion of an information bearing surface 7 of the video disc 5 is shown enlarged within a circle 8. A plurality of information tracks 9 are formed on the video disc 5. Each track is formed with successive light reflective regions 10 and light non-reflective regions 11. The direction of reading is indicated by an arrow 12. The read beam 4 has two degrees of movement, the first of which is in the radial direction as indicated by a double headed arrow 13; the second of which is the tangential direction as indicated by a double headed arrow 14. The double heads of each of the arrows 13 and 14 indicate that the read beam 4 can move in both directions in each of the radial and tangential directions.

Referring to FIGURE 2, the optical system comprises a lens 15 employed for shaping the beam to fully fill an entrance aperture 16 of a microscopic objective lens 17. The objective lens is employed for forming the spot 6 of light at its points of impingement with the video disc 5. Improved results have been found when the entrance aperture 16 is overfilled by the reading beam 4. This results in maximum light intensity at the spot 6.

For further details of the apparatus of FIGURE 1, reference may be made to publication EP—A—4 476, but some of the more important features are summarised here.

After the beam 4 is properly formed by the lens 15, it passes through a diffraction grating 18 which splits the read beam into three separate beams (not shown). Two of the beams are employed for developing a radial tracking error and the other is used for developing both a focus error signal and the information signal. These three beams are treated identically by the remaining portion of the optical system. Therefore, they are collectively referred to as the read beam 4. The output from the diffraction grating 18 is applied to a beam splitting prism 20. The axis of the prism 20 is slightly offset from the path of the beam 4 for reasons that are explained with reference to the description of the performance of the optical system 2 as it relates to a reflected beam 4'. The transmitted portion of the beam 4 is applied through a quarter wave plate 22 which provides a forty-five degree shift in polarization of the light forming the beam 4. The read beam 4 next impinges upon a fixed mirror 24 which re-directs the read beam 4 to a first articulated mirror 26. The function of the first articulated mirror 26 is to move the light beam in a first degree of motion which is tangential to the surface of the video disc 5 to correct for time base errors introduced into the reading beam 4 because of eccentricities in the manufacture of the disc 5. The tangential direction is in the forward and/or backward direction of the information track on the video disc 5 as indicated by the double headed arrow 14. The read beam 4 now impinges upon the entrance aperture 16, as previously described, and is focused to a spot 6 upon the information bearing track 9 of the video disc 5 by the lens 17.

The first articulated mirror 26 directs the light beam to a second articulated mirror 28. The second articulated mirror 28 is employed as a tracking mirror. It is the function of the tracking mirror 28 to respond to tracking error signals so as to slightly change its physical position to direct the point of impingement 6 of the read beam 4 so as to radially track the information carrying indicia on the surface of the video disc 5. The second articulated mirror 28 has one degree of movement which moves the light beam in a radial direction over the surface of the video disc 5 or indicated by the double headed arrow 13.

In normal playing mode, the focused beam of light impinges upon successively positioned light reflective regions 10 and light non-reflective regions 11 representing the frequency modulated information. In the preferred embodiment, the light non-reflective regions 11 are light scattering elements carried by the video disc 5. The modulated light beam is a light equivalent of the electrical frequency modulated signal containing all the recorded information. This modulated light beam is generated by the microscopic objective lens 17 by gathering as much reflected light from the successively positioned light reflective region 10 and light non-reflective regions 11 on the video disc 5. The reflected portion of the read beam is indicated at 4'. The reflected read beam 4' retraces the same path previously explained by impinging in sequence upon the second articulated mirror 28, the first articulated mirror 26, and the fixed mirror 24. The reflected read beam 4' next passes through the quarterwave plate 22. The quarterwave plate 22 provides an additional forty-five degree polarization shift resulting in a total of ninety degrees in shift of polarization to the reflected read beam 4'. The reflected read beam 4' now impinges upon the beam splitting prism 20, which prism diverts the reflected read beam 4' to impinge upon a signal recovery subsystem indicated generally at 30.

The function of the beam splitting prism is to prevent the total reflected read beam 4' from reentering the laser 3. The effect of the returning read beam 4' upon the laser 3 would be to upset the mechanism whereby the laser oscillates in its predetermined mode of operation. Accordingly, the beam splitting prism 20 redirects a significant portion of the reflected read beam 4' for preventing feedback into the laser 3 when the laser 3 would be affected by this feedback portion of the reflected read beam 4'. For those solid state lasers which are unaffected by the feedback of the reflected light beam 4', the beam splitting prism 20 is unnecessary. The solid state laser 3 can function as the photo detector portion of the signal recovery subsystem 30 to be described hereinafter.

Referring to FIGURE 1, the normal operating mode of the signal recovery subsystem 30 is to provide a plurality of informational signals to the remaining portion of the player 1. These informational signals fall generally into two types, an informational signal itself which represents the stored information. A second type of signal is a control signal derived from the informational signal for controlling various portions of the player. The informational signal is a frequency modulated signal representing the information stored on the video disc 5. This informational signal is applied to an FM processing subsystem indicated at 32 over a line 34. A first control signal generated by the signal recovery subsystem 30 is a differential focus error signal applied to a focus servo subsystem indicated at 36 over a line 38. A second type of control signal generated by the signal recovery subsystem 30 is a differential tracking error signal applied to a tracking servo subsystem 40 over a line 42. The differential tracking error signal from the signal recovery subsystem 30 is also applied to a stop motion subsystem indicated at 44 over the line 42 and a second line 46.

Upon receipt of the START pulse generated in a function generator 47, the first function of the video disc player 1 is to activate the laser 3, activate a spindle motor 48, causing an integrally attached spindle 49 and its video disc member 5 mounted thereon to begin spinning. The speed of rotation of the spindle 49, as provided by the spindle motor 48, is under the control of a spindle servo subsystem 50. A spindle tachometer (not shown) is mounted relative to the spindle 49 to generate electrical signal showing the present speed of rotation of the spindle 49. The tachometer comprises two elements which are located one hundred eighty degrees apart with reference to the spindle 49. Each of these tachometer elements generates an output pulse as is common in the art. Because they are located one hundred eighty degrees out of phase with each other, the electrical signals generated by each are one hundred eighty degrees out of pulses with each other. A line 51 carries the sequence of pulses generated by the first tachometer elements to the spindle servo subsystem 50. A line 52 carries the tachometer pulses from the second tachometer element to the spindle servo subsystem 50. When the spindle servo subsystem 50 reaches its predetermined rotational velocity of 1799.1 revolutions per minute, it generates a player enable signal on a line 54. The accurate rotational speed of 1799.1 revolutions per minute allows 30 frames of television information to be displayed on a standard television receiver.

Tangential Servo

A tangential servo subsystem 80 receives its first input signal from the FM processing subsystem 32 over a line 82. The input signal present on the line 82 is the frequency modulated signal detected from the surface of the video disc 5 by the lens 17 as amplified in the signal recovery subsystem 30 and applied to the FM processing subsystem 32 by a line 34. The signal on the line 82 is the video signal. The second input signal to the tangential servo subsystem 80 is over a line 84. The signal on the line 84 is a variable DC signal generated by a carriage position potentiometer. The amplitude of the variable voltage signal on the line 84 indicates the relative position of the point of impact of the reading spot 6 over the radial distance indicated by a double headed arrow 86 as drawn upon the surface of the video disc 5. This variable voltage adjusts the gain of an internal circuit for adjusting its operating characteristics to track the relative position of the spot as it transverses the radial position as indicated by the length of the line 86.

The function of the tangential time base error correction subsystem 80 is to adjust the signal detected from the video disc 5 for tangential errors caused by eccentricity of the information tracks 9 on the disc 5 and other errors introduced into the detected signal due to any physical imperfection of the video disc 5 itself. The tangential time base error correction subsystem 80 performs its function by comparing a signal read from the disc 5 with a locally generated signal. The difference between the two signals is indicative of the instantaneous error in the signal being read by the player 1. More specially, the signal read from the disc 5 is one which was carefully applied to the disc with a predetermined amplitude and phase relative to other signals recorded therewith. For a color television FM signal this is the color burst portion of the video signal. The locally generated signal is a crystal controlled oscillator operating at the color subcarrier frequency of 3.579545 megahertz. The tangential time base error correction subsystem 80 compares the phase difference between the color burst signal and the color subcarrier oscillator frequency and detects any difference. This difference is then employed for adjusting the phase of the remaining portion of the line of FM information which contained the color burst signal. The phase difference of each succeeding line is generated in exactly the same manner for providing continuous tangential time base error correction for the entire signal read from the disc.

In other embodiments storing information signals which do not have a portion thereof comparable to a color burst signal, such a signal having predetermined amplitude and phase relative to the remaining signals on the disc 5 can be periodically added to the information when recorded on the disc 5. In the play mode, this portion of the recorded information can be selected out and compared with a locally generated signal comparable to the color subcarrier oscillator. In this manner, tangential time base error correction can be achieved for any signal recorded on a video disc member.

The error signal so detected in the comparison of the signal read from the video disc 5 and the internally generated color subcarrier oscillator frequency is applied to the first articulated mirror 26 over lines 88 and 90. The signals on lines 88 and 90 operate to move the first articulated mirror 26 so as to redirect the read beam 4 forward and backwards along the information track, in the direction of the double headed arrow 14, to correct for the time base error injected due to an imperfection from a manufacture of the video disc 5 and/or the reading therefrom. Another output signal from the tangential time base error correction subsystem 80 is applied to the stop motion subsystem 44 over a line 92. This signal, as completely described hereinafter, is the composite sync signal which is generated in the subsystem 80 by separating the composite sync signal from the remaining video signal. It has been found convenient to locate the sync pulse separator in the tangential time base error correction subsystem 80. This sync pulse separator could be located in any other portion of the player at a point where the complete video signal is available from the FM processing subsystem 32.

A further output signal from the tangential subsystem is a motor reference frequency applied to the spindle servo subsystem 50 over a line 94. The generation of the motor reference frequency in the tangential subsystem 80 is convenient because of the presence of the color subcarrier oscillator frequency used in the comparison operation as previously described. This color subcarrier oscillator frequency is an accurately generated signal. It is divided down to a motor reference frequency used in the control of the spindle servo speed. By utilising the colour subcarrier frequency as a control frequency for the speed of the spindle, the speed of the spindle is effectively locked to this colour subcarrier frequency causing the spindle to rotate at the precise frame frequency rate required for maximum fidelity in the display of the information detected from the video disc 5 on either a television receiver indicated at 96 and/or a TV monitor indicated at 98.

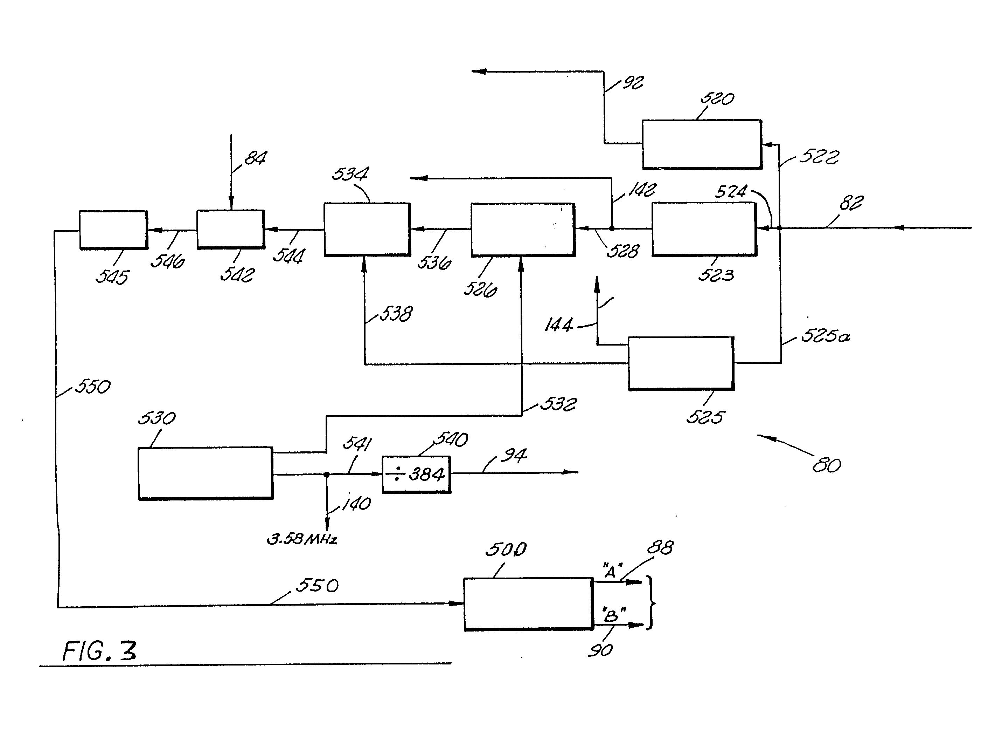

Referring to FIGURE 3, there is shown a block diagram of the tangential servo subsystem 80. A first input signal to the tangential servo subsystem 80 is applied from the FM processing system 32 over the line 82. The signal present on the line 82 is the video signal available from the video distribution amplifiers as contained in the FM processing system 32. The video signal on the line 82 is applied to a sync pulse separator circuit 520 over a line 522 and to a chroma separator filter 523 over a line 524. The video signal on the line 82 is also applied to a burst gate separator circuit 525 over a line 525a.

The function of the vertical sync pulse separator circuit 520 is to separate the vertical sync signal from the video signal. The vertical sync signal is applied to the stop motion subsystem 44 over the line 92. The function of the chroma separator filter 523 is to separate the chroma portion from the total video signal received from the FM processing circuit 32. The output from the chroma separator filter 523 is applied to the FM corrector portion of the FM processing circuit 32 over the line 142. The output signal from the chroma separator filter 523 is also applied to a burst phase detector circuit 526 over a line 528. The burst phase detector circuit 526 has a second input signal from a color subcarrier oscillator circuit 530 over a line 532. The purpose of the burst phase detector circuit 526 is to compare the instantaneous phase of the color burst signal with a very accurately generated color subcarrier oscillator signal generated in the oscillator 530. The phase difference detected in the burst phase detector circuit 526 is applied to a sample and hold circuit 534 over a line 536. The function of the sample and hold circuit is to store a voltage equivalent of the phase difference detected in the burst phase detector circuit 526 for the time during which the full line of video information containing that color burst signal, used in generating the phase difference, is read from the disc 5.

The purpose of the burst gate separator 525 is to generate an enabling signal indicating the time during which the color burst portion of the video waveform is received from the FM processing unit 32. The output signal from the burst gate separator 525 is applied to the FM corrector portion of the FM processing system 32 over a line 144. The same burst gate timing signal is applied to the sample and hold circuit 534 over a line 538. The enabling signal on the line 538 gates the input from the burst phase detector 526 into the sample and hold circuit 534 during the color burst portion of the video signal.

The color subcarrier oscillator circuit 530 applies the color subcarrier frequency to the audio processing circuit 114 over a line 140. The color subcarrier oscillator circuit 530 supplies the color subcarrier frequency to a divide circuit 540 over a line 541 which divides the color subcarrier frequency by three hundred and eighty-four for generating the motor reference frequency. The motor reference frequency signal is applied to the spindle servo subsystem 50 over the line 94.

The output from the sample and hold circuit 534 is applied to an automatic gain controlled amplifier circuit 542 over a line 544. The automatic gain controlled amplifier 542 has a second input signal from the carriage position potentiometer as applied thereto over the line 84. The function of the signal on the line 84 is to change the gain of the amplifier 542 as the reading beam 4 radially moves from the inside track to the outside track and/or conversely when the reading beam moves from the outside track to the inside track. The need for this adjustment to change with a change in the radial position is caused by the formation of the reflective regions 10 and non-reflective regions 11 with different dimensions from the outside track to the inside track. The purpose of the constant rotational speed from the spindle motor 48 is to turn the disc 5 through nearly thirty revolutions per second to provide thirty frames of information to the television receiver 96. The length of a track at the outermost circumference is much longer than the length of a track at the innermost circumference. Since the same amount of information is stored in one revolution at both the inner and outer circumference, the size of the reflective and non-reflective regions 10 and 11, respectively, are adjusted from the inner radius to the outer radius. Accordingly, this change in size requires that certain adjustments in the processing of the detected signal read from the video disc 5 are made for optimum operation. One of the required adjustments is to adjust the gain of the amplifier 542 which adjusts for the time base error as the reading point radially changes from an inside to an outside circumference. The carriage position potentiometer (not shown) generates a sufficiently accurate reference voltage indicating the radial position of the point of impingement of the reading beam 4 onto the video disc 5. The output from the amplifier 542 is applied to a compensation circuit 545 over a line 546. The compensation network 545 is employed for preventing any system oscillations and instability. The output from the compensation network 545 is applied to a tangential mirror driver circuit 500 over a line 550. The circuit 500 was described with reference to Figure 9 in publication 4476. The circuit 500 comprises a pair of push/pull amplifiers. The output from one of the push/pull amplifiers (not shown) is applied to the tangential mirror 26 over a line 88. The output from the second push/pull amplifier (not shown) is applied to the tangential mirror 26 over a line 90.

Time Base Error Correction

The recovered FM video signal, from the surface of the video disc 5 is corrected, for time base errors introduced by the mechanics of the reading process, in the tangential servo subsystem 80. Time base errors are introduced into the reading process due to the minor imperfections in the video disc 5. A time base error introduces a slight phase change into the recovered FM video signal. A typical time base error base correction system includes a highly accurate oscillator for generating a source of signals used as a phase standard for comparison purposes. In the preferred embodiment, the accurate oscillator is conveniently chosen to oscillate at the color subcarrier frequency. The color subcarrier frequency is also used during the writing process for controlling the speed of revolution of the writing disc during the writing process. In this manner, the reading process is phase controlled by the same highly accurate oscillator as was used in the writing process. The output from the highly controlled oscillator is compared with the color burst signal of a FM color video signal. An alternative system records a highly accurate frequency at any selected frequency during the writing process. During the reading process, this frequency would be compared with a highly accurate oscillator in the player and the phase difference between the two signals is sensed and is employed for the same purpose.

The color burst signal forms a small portion of the recovered FM video signal. A color burst signal is repeated in each line of color T.V. video information in the recovered FM video signal. In the preferred embodiment, each portion of the color burst signal is compared with the highly accurate subcarrier oscillator signal for detecting the presence of any phase error. In a different embodiment, the comparison may not occur during each availability of the color burst signal or its equivalent, but may be sampled at randomly or predetermined locations in the recovered signal containing the recorded equivalent of the color burst signal. When the recorded information is not so highly sensitive to phase error, the comparison may occur at greater spaced locations. In general, the phase difference between the recorded signal and the locally generated signal is repetitively sensed at spaced locations on the recording surface for adjusting for phase errors in the recovered signal. In the preferred embodiment this repetitive sensing for phase error occurs on each line of the FM video signal.

The detected phase error is stored for a period of time extending to the next sampling process. This phase error is used to adjust the reading position of the reading beam so as to impinge upon the video disc at a location such as to correct for the phase error.

Repetitive comparison of the recorded signal with the locally generated, highly accurate frequency, continuously adjusts for an incremental portion of the recovered video signal recovered during the sampling periods.

The phase error changes as the reading beam radially tracks across the information bearing surface portion of the video disc 5, and a further signal is required for adjusting the phase error according to the instantaneous location of the reading beam to adjust the phase error according to its instantaneous location on the information bearing portion of the video disc 5. This phase error change is caused by the change in physical size of the indicia contained on the video disc surface as the radial tracking position changes from the inner location to the outer location. The same amount of information is contained at an inner radius as at an outer radius and hence the indicia must be smaller at the inner radius when compared to the indicia at the outer radius.

The further signal is introduced in the AGC amplifier 542 where the gain is automatically adjusted at 84 in dependance on the radial position as described above.

The tangential mirror 26 is the mechanism selected for correcting the time base errors introduced by the mechanics of the reading system. Such a mirror is electronically controlled and is a means for changing the phase of the recovered video signal read from the disc by changing the time base on which the signals are read from the disc. This is achieved by directing the mirror to read the information from the disc at an incremental point earlier or later in time when compared to the time and spacial location during which the phase error was detected. The amount of phase error determines the degree of change in location and hence time in which the information is read.

When no phase error is detected in the time base correcting system the point of impingement of the read beam with the video disc surface 5 is not moved. When a phase error is detected during the comparison period, electronics signals are generated for changing the point of impingement so that the recovered information from the video disc is available for processing at a point in time earlier or later when compared to the comparison period. This is achieved by changing the spacial location of the point of intersection of the read beam with the video disc surface 5.

## Claims

1. A time base error correction system for use in apparatus including an optical system (2) for impinging a source beam (4) of radiation at a selected location upon tangentially arranged information tracks (9) on a surface of a disc (5) to produce a reflected modulated beam (4') of radiation containing the information, and signal recovery means (30) for recovering the information from the modulated beam and for producing an electrical signal representative of the information, the information signal including a synchronising signal, said error correction system comprising: separation means (525) for separating the synchronising signal from the information in the electrical signal; reference signal means (530) for generating a reference signal having a prescribed frequency; phase detection means (526 and 534) for detecting the relative phase between the synchronising signal and the reference signal and for generating a control signal representative of the detected phase difference there between; and beam steering means responsive to the control signal for adjusting the time base of the signal read from the information bearing surface by the signal recovery means to correct for time base errors introduced by the system by beam steering means for moving the impingement location of the source beam along the information tracks, whereby the phase difference between the synchronising signal and the reference signal is reduced; characterised by radial location detection means for detecting the radial location on the disc at which the source beam impinges, and control signal altering means for altering the control signal as a function of the radial location.

2. A system as claimed in Claim 1, including spindle servo means responsive to the reference signal means for rotating the disc at a prescribed angular rate of rotation.

3. A system as claimed in Claim 2 wherein the spindle servo means comprises spindle motor means for rotating the disc, spindle tachometer means for generating a spindle tachometer signal indicative of the actual angular rate of rotation of the spindle motor means, and spindle error means responsive to the reference signal means and the spindle tachometer means for controlling the angular rate of rotation of the spindle motor means.

4. A system as claimed in Claim 2 or 3, wherein the spindle servo means comprises a motor drive means for rotating the disc, and the system further includes a frequency divider coupled to the reference signal source for dividing the reference signal by a fixed number and for outputting the divided reference signal to the motor drive means, thereby establishing a direct relationship between reference oscillator frequency and rotational velocity of the disc.

5. A system according to any preceding claim for use in a video disc player apparatus system for deriving video information from a frequency modulated signal stored in a spirally arranged information track on a surface of the disc, wherein the video information includes a colour subcarrier having a colour burst synchronising signal, the optical system produces a frequency modulated beam of radiation containing the video information, the signal recovery means recovers a frequency modulated electrical signal from the frequency modulated beam, and the player apparatus includes video detector means for deriving the video information from the frequency modulated electrical signal, the separation means comprises a colour burst separation means for separating the colour burst synchronising signal from the video information, the reference signal means comprises a colour subcarrier reference ocillator means for generating a colour subcarrier reference signal, and the phase detection means comprises a colour burst phase detection means for detecting phase differences between the colour burst synchronising signal and the colour subcarrier reference signal, and for generating the control signal representative of detected phase difference there between and controlling the beam steering means.

6. A system as claimed in any preceding claim, wherein the synchronising signal is of short duration and occurs periodically in the information, and the phase detection means includes means to establish the control signal during the occurrence of the synchronising signal and means to maintain the control signal at a constant level until the next occurring synchronising signal.

7. A system as claimed in Claim 6 wherein the apparatus is a television receiver, and the phase detection means maintains the control signal at a constant level for an entire line of television information.

8. A system as claimed in Claim 7 wherein the phase detection means establishes a new updated control signal level for each new line of television information.

9. A system as claimed in any of claims 6—8 wherein the means to maintain the control signal at a constant level comprises a sample and hold circuit.

10. A system as claimed in any preceding claim, wherein the control signal altering means includes a variable gain amplifier, and the radial location detection means includes means for altering the gain of the amplifier as a function of the radial location on the disc at which the source beam impinges.

11. A system as claimed in Claim 10 wherein the means for altering the gain of the amplifier comprises a potentiometer coupled to and actuated by a carriage means for moving the disc radially relative to the source beam.

12. A method of time base error correction for use in an apparatus including an optical system (2) for impinging a source beam (4) of radiation at a selected location upon tangentially arranged information tracks (9) on a surface of a disc (5) to produce a modulated beam (4') of radiation containing the information and signal recovery means (30) for recovering the information from a modulated beam and for producing an electrical signal representative of the information, said method comprising the steps of: separating a synchronising signal from the information in the electrical signal: generating a reference signal having a prescribed frequency; detecting the relative phase between the synchronising signal and the reference signal; generating a control signal representative of the detected phase difference there-between; and moving the impingement location of the source beam along the information tracks as a function of the control signal, whereby the phase difference between the synchronising signal and the reference signal is reduced, characterised by the steps of detecting the radial location on the disc at which the source beam impinges and altering the control signal as a function of the radial location.

13. A method as claimed in Claim 12 including the step of rotating the disc at a prescribed angular rate of rotation controlled by the reference signal.

**Patentansprüche**

1. Korrektursystem für Zeitbasisfehler zur Verwendung in einer Einrichtung mit einem optischen System (2), das ein Quellenstrahlungsbündel (4) auf eine ausgewählte Stelle in tangential angeordneten Informationsspuren (9) auf einer Oberfläche einer Platte (5) richtet, um ein reflektiertes moduliertes Strahlungsbündel (4') zu erzeugen, das die Information enthält, und mit Signalwiederherstellungsvorrichtungen (30) zur Wiederherstellung der Information aus dem modulierten Bündel und zur Erzeugung eines elektrischen Signals, das die Information darstellt, wobei das Informationssignal ein Synchronisiersignal enthält und in dem Fehlerkorrektursystem die folgenden Bestandteile enthalten sind: Trennvorrichtungen (525) zur Trennung des Synchronisiersignals von der Information im elektrischen Signal; Bezugssignalvorrichtungen (530) zur Erzeugung eines Bezugssignals, das eine vorgegebene Frequenz aufweist; Phasendetektionsvorrichtungen (526 und 534) zum Feststellen der relativen Phase zwischen dem Synchronisiersignal und dem Bezugssignal und zur Erzeugung eines Steuersignals, das die dazwischen festgestellte Phasendifferenz darstellt; und Bündelsteuerungsvorrichtungen, die auf das Steuersignal reagieren, um die Zeitbasis des Signals nachzuführen, das aus der informationstragenden Oberfläche durch die Signalwiederherstellungsvorrichtungen ausgelesen wurde, um Zeitbasisfehler zu korrigieren, die durch das System durch die Bündelsteuerungsvorrichtungen eingeführt werden, die die Auftreffstelle des Quellenbündels längs der Informationsspuren verschieben, wodurch die Phasendifferenz zwischen dem Synchronisiersignal und dem Bezugssignal verringert wird, charakterisiert durch Detektorvorrichtungen für die radiale Auftreffstelle, mit denen die radiale Stelle auf der Platte festgestellt wird, an der das Quellenbündel auftrifft, und Änderungsvorrichtungen für das Steuersignal, mit denen das Steuersignal als Funktion der radialen Auftreffstelle geändert wird.

2. System nach Anspruch 1, mit Spindelservovorrichtungen, die auf die Bezugssignalvorrichtungen reagieren, um die Platte mit einer vorgeschriebenen Rotations-Winkelgeschwindigkeit zu drehen.

3. System nach Anspruch 2, in dem die Spindelservovorrichtungen einen Spindelmotor zur Drehung der Platte aufweisen, ein Spindeltachometer zur Erzeugung eines Spindeltachometersignals, das die tatsächliche Rotations-Winkelgeschwindigkeit des Spindelmotors anzeigt, und Spindelfehlervorrichtungen, die auf die Bezugssignalvorrichtungen und das Spindeltachometer reagieren, um die Rotations-Winkelgeschwindigkeit des Spindelmotors zu regeln.

4. System nach Anspruch 2 oder 3, in dem die Spindelservovorrichtungen einen Motorantrieb zum Drehen der Platte enthalten und das System weiter einen Frequenzteiler aufweist, der mit der Bezugssignalquelle verbunden ist, um das Bezugssignal durch eine feste Zahl zu dividieren und das dividierte Bezugssignal an den Motorantrieb auszugeben, um so eine direkte Beziehung zwischen der Bezugsoszillatorfrequenz und der Drehgeschwindigkeit der Platte herzustellen.

5. System nach einem beliebigen der vorstehenden Ansprüche zur Verwendung in einer Videoplattenspielereinrichtung, die eine Videoinformation aus einem frequenzmodulierten Signal ableitet, das in einer spiralförmig angeordneten Informationsspur auf einer Oberfläche der Platte angeordnet ist, wobei die Videoinformation einen Farbhilfsträger mit einem Farbsynchronsignal enthält, das optische System ein frequenzmoduliertes Strahlungsbündel mit der Videoinformation erzeugt, die Signalwiederherstellungsvorrichtungen ein frequenzmoduliertes elektrisches Signal aus dem frequenzmodulierten Bündel erzeugen und die Wiedergabeeinrichtung eine Videodetektorvorrichtung enthält, mit der die Videoinformation aus dem frequenzmodulierten elektrischen Signal abgeleitet wird, die Trennvorrichtungen eine Farbsynchronsignal-Trennvorrichtung enthalten, mit der das Farbsynchronsignal von der Videoinformation getrennt wird, die Bezugssignalvorrichtungen einen Bezugsoszillator für den Farbhilfsträger enthalten, um ein Bezugssignal für den Farbhilfsträger zu erzeugen, und die Phasendetektorvorrichtungen eine Phasendetektorvorrichtung für den Farbhilfsträger enthalten, um Phasenunterschiede zwischen dem Farbsynchronsignal und dem Bezugssignal des Farbhilfsträgers festzustellen und ein Regelsignal zu erzeugen, das die dazwischen festgestellte Phasendifferenz anzeigt und die Bündelsteuerungsvorrichtungen regelt.

6. System nach einem beliebigen der vorstehenden Ansprüche, in dem das Synchronisiersignal eine kurze Dauer aufweist und periodisch in der Information auftaucht und die Phasendetektorvorrichtungen Vorrichtungen enthalten, um ein Regelsignal während des Auftretens des Synchronisiersignals zu erzeugen, sowie Vorrichtungen, um das Regelsignal auf einem konstanten Pegel zu halten, bis das nächste Synchronisiersignal auftritt.

7. System nach Anspruch 6, in dem die Einrichtung ein Fernsehempfänger ist und die Phasendetektionsvorrichtungen das Regelsignal während einer ganzen Zeile der Fernsehinformation auf einem konstanten Pegel halten.

8. System nach Anspruch 7, in dem die Phasendetektionsvorrichtungen bei jeder neuen Zeile der Fernsehinformation einen neuen angepaßten Regelsignalpegel erzeugen.

9. System nach einem beliebigen der Ansprüche 6 bis 8, in dem die Vorrichtungen zur Aufrechterhaltung des Regelsignals bei einem konstanten Pegel einen Abtast- und Halteschaltkreis enthalten.

10. System nach einem beliebigen der vorstehenden Ansprüche, in dem die Änderungsvorrichtungen für das Regelsignal einen Verstärker mit variabler Verstärkung enthalten und die Detektorvorrichtungen für die radiale Auftreffstelle Vorrichtungen enthalten, mit denen die Verstärkung des Verstärkers als Funktion der radialen Stelle auf der Platte geändert wird, an der das Quellenbündel auftrifft.

11. System nach Anspruch 10, in dem die Vorrichtungen zur Änderung der Verstärkung des Verstärkers ein Potentiometer enthalten, das mit einem Schlitten gekoppelt ist, der die Platte in radialer Richtung relativ zum Quellenbündel verschiebt und das Potentiometer betätigt.

12. Verfahren zur Korrektur von Zeitbasisfehlern zur Verwendung in einer Einrichtung mit einem optischen System (2), das ein Quellenstrahlungsbündel (4) auf eine ausgewählte Stelle in tangential angeordneten Informationsspuren (9) auf einer Oberfläche einer Platte (5) richtet, um ein moduliertes Strahlungsbündel (4) zu erzeugen, das die Information enthält, und mit Signalwiederherstellungsvorrichtungen (30) zur Wiederherstellung der Information aus einem modulierten Bündel und zur Erzeugung eines elektrischen Signals, das die Information darstellt, wobei das Verfahren die folgenden Schritte enthält: Abtrennen eines Synchronisiersignals aus der Information im elektrischen Signal; Erzeugen eines Bezugssignals, das eine vorbestimmte Frequenz aufweist; Feststellen der relativen Phase zwischen dem Synchronisiersignal und dem Bezugssignal; Erzeugen eines Regelsignals, das die dazwischen festgestellte Phasendifferenz darstellt; und Verschieben der Auftreffstelle des Quellenbündels längs der Informationsspuren als Funktion des Regelsignals, wodurch die Phasendifferenz zwischen dem Synchronisiersignal und dem Bezugssignal verringert wird, gekennzeichnet durch die Schritte der Feststellung der radialen Stelle auf der Platte, an der das Quellenbündel auftrifft und Ändern des Regelsignals als Funktion der radialen Auftreffstelle.

13. Verfahren nach Anspruch 12, mit dem Schritt des Drehens der Platte mit einer vorgeschriebenen Rotations-Winkelgeschwindigkeit, die durch das Bezugssignal geregelt wird.

**Revendications**

1. Système de correction d'erreurs de la base de temps à utiliser dans un appareil comprenant un système optique (2) pour provoquer l'impact d'un faisceau (4) de rayonnement d'une source en un emplacement choisi sur des pistes de l'information (9) agencées tangentiellement sur une surface d'un disque (5) pour produire un faisceau modulé réfléchi (4') de rayonnement contenant l'information, et un moyen de restitution de signaux (30) pour restituer l'information du faisceau modulé et pour produire un signal électrique représentatif de l'information, le signal d'information comprenant un signal de synchronisation, ledit système de correction d'erreurs de la base de temps comprenant: un moyen de séparation (525) pour séparer le signal de synchronisation de l'information dans le signal électrique; un moyen de signal de référence (530) pour produire un signal de référence ayant une fréquence prescrite; un moyen de détection de phase (526 et 534) pour détecter la phase relative entre le signal de synchronisation et le signal de référence et pour produire un signal de réglage représentatif de la différence détectée de phase entre eux; et un moyen de guidage du faisceau répondant au signal de réglage pour ajuster la base de temps du signal lu de la surface porteuse de l'information par le moyen de restitution de signaux pour corriger des erreurs de la base de temps introduites par le système par le moyen de guidage du faisceau pour déplacer l'emplacement d'impact du faisceau de la source le long des pistes de l'information, la différence de phase entre le signal de synchronisation et le signal de référence étant ainsi réduite; caractérisé par un moyen de détection d'emplacement radial pour détecter l'emplacement radial sur le disque auquel le faisceau de la source fait impact, et un moyen modifiant le signal de réglage pour modifier le signal de réglage en fonction de l'emplacement radial.

2. Système selon la revendication 1 comprenant un moyen d'asservissement de la broche répondant au moyen de signal de référence pour faire tourner le disque à une vitesse angulaire prescrite de rotation.

3. Système selon la revendication 2 où le moyen d'asservissement de la broche comprend un moyen formant moteur de la broche pour faire tourner le disque, un moyen formant tachymètre de la broche pour produire un signal de tachymètre de la broche indiquant la vitesse angulaire réelle de rotation du moyen formant moteur de la broche et un moyen d'erreur de la broche répondant au moyen de signal de référence et au moyen formant tachymètre de la broche pour régler la vitesse angulaire de rotation du moyen formant moteur de la broche.

4. Système selon la revendication 2 ou 3 où le moyen d'asservissement de la broche comprend un moyen d'entraînement à moteur pour faire tourner le disque et le système comprend de plus un diviseur de fréquence couplé à la source de signaux de référence pour diviser le signal de référence par un nombre fixe et pour appliquer le signal divisé de référence au moyen d'entraînement à moteur, pour ainsi établir une relation directe entre la fréquence de l'oscillateur de référence et la vitesse de rotation du disque.

5. Système selon l'une quelconque des revendications précédentes à utiliser dans un système d'un appareil de lecture de vidéodisque pour dériver une information vidéo d'un signal modulé en fréquence stocké dans une piste de l'information agencée en spirale sur une surface du disque, où l'information vidéo comprend une sous-porteuse couleur ayant un signal de synchronisation de la salve couleur, le système optique produit un faisceau de rayonnement modulé en fréquence contenant l'information vidéo, le moyen de restitution de signaux restitue un signal électrique modulé en fréquence du faisceau modulé en fréquence et l'appareil de lecture comprend un moyen détecteur vidéo pour dériver l'information vidéo du signal électrique modulé en fréquence, le moyen de séparation comprend un moyen de séparation de la salve couleur pour séparer le signal de synchronisation de la salve couleur de l'information vidéo, le moyen de signal de référence comprend un moyen oscillateur de référence de sous-porteuse couleur pour produire un signal de référence de sous-porteuse couleur, et le moyen de détection de la phase comprend un moyen de détection de la phase de la salve couleur pour détecter les différences de phase entre le signal de synchronisation de la salve couleur et le signal de référence de sous-porteuse couleur, et pour produire le signal de réglage représentatif de la différence détectée de phase entre eux et régler le moyen de guidage du faisceau.

6. Système selon l'une quelconque des revendications précédentes où le signal de synchronisation est de courte durée et se produit périodiquement pendant l'information et le moyen de détection de la phase comprend un moyen pour établir le signal de réglage pendant la présence du signal de synchronisation et un moyen pour maintenir le signal de réglage à un niveau constant jusqu'au signal suivant de synchronisation.

7. Système selon la revendication 6 où l'appareil est un téléviseur et le moyen de détection de la phase maintient le signal de réglage à un niveau constant pendant toute une ligne de l'information de télévision.

8. Système selon la revendication 7 où le moyen de détection de la phase établit un nouveau niveau du signal de réglage remis au point pour chaque nouvelle ligne de l'information de télévision.

9. Système selon l'une des revendications 6—8 où le moyen pour maintenir le signal de réglage à un niveau constant comprend un circuit d'échantillonnage et de maintien.

10. Système selon l'une des revendications précédentes où le moyen modifiant le signal de réglage comprend un amplificateur à gain variable et le moyen de détection de l'emplacement radial comprend un moyen pour modifier le gain de l'amplificateur en fonction de l'emplacement radial sur le disque auquel fait impact le faisceau de la source.

11. Système selon la revendication 10 où le moyen pour modifier le gain de l'amplificateur comprend un potentiomètre couplé à et actionné par un moyen formant chariot pour déplacer le disque radialement par rapport au faisceau de la source.

12. Méthode de correction d'erreurs de la base de temps à utiliser dans un appareil comportant un système optique (2) pour provoquer l'impact d'un faisceau (4) de rayonnement d'une source en un emplacement choisi sur des pistes de l'information (9) agencées tangentiellement sur une surface d'un disque (5) pour produire un faisceau modulé (4') de rayonnement contenant l'information et un moyen de restitution de signaux (30) pour restituer l'information d'un faisceau modulé et pour produire un signal électrique représentatif de l'information, ladite méthode comprenant les étapes de: séparer un signal de synchronisation de l'information dans le signal électrique: produire un signal de référence ayant une fréquence prescrite; détecter la phase relative entre le signal de synchronisation et le signal de référence; produire un signal de réglage représentatif de la différence détectée de phase entre eux; et déplacer l'emplacement d'impact du faisceau de la source le long des pistes de l'information en fonction du signal de réglage, pour ainsi réduire la différence de phase entre le signal de synchronisation et le signal de référence, caractérisée par les étapes de détecter l'emplacement radial sur le disque auquel le faisceau de la source fait impact et modifier le signal de réglage en fonction de l'emplacement radial.

13. Méthode selon la revendication 12 comprenant l'étape de faire tourner le disque à une vitesse angulaire prescrite de rotation contrôlée par le signal de référence.

FIG.1

0 004 476

FIG. 2

FIG. 3